# EUROPÄISCHE PATENTSCHRIFT

(11) **EP 3 599 594 B1**
(45) Veröffentlichungstag und Bekanntmachung des Hinweises auf die Patenterteilung: **26.04.2023**
(21) Anmeldenummer: 19000333.5
(22) Anmeldetag: 12.07.2019
(51) Int. Cl.: G08C 19/00, H01B 13/00, H04Q 9/00, H01R 43/042, B23D 15/14, B23D 29/00, H02G 1/00, G08C 17/00, G08C 17/02, G08C 23/06

(54) **KABELKONFEKTIONIERUNGSWERKZEUGANORDNUNG**
CABLE FABRICATION TOOL ASSEMBLY
ENSEMBLE OUTIL DE CONFECTION DE CÂBLE

(30) Priorität: 25.07.2018 DE 202018003442 U
(43) Veröffentlichungstag der Anmeldung: 29.01.2020
(73) Patentinhaber: IPR GmbH, 96465 Neustadt b. Coburg (DE)
(72) Erfinder: Winterfeld, Erika, D-96465 Neustadt b. Coburg (DE)
(74) Vertreter: Weihrauch, Frank

(56) Entgegenhaltungen:
- EP-A1- 3 333 993
- EP-A1- 3 333 994
- WO-A1-2016/005838
- WO-A1-2016/198973
- WO-A2-2016/112153
- US-A1- 2016 363 510

## Beschreibung

Die Erfindung betrifft eine Kabelkonfektionierungswerkzeuganordnung mit integrierter Datenverarbeitung.

Aus dem Stand der Technik sind hydraulisch betriebene Kabelkonfektionierungswerkzeuganordnungen bekannt, welche einen handgeführten Werkzeugkopf mit einem hydraulisch betätigten Werkzeug aufweisen, wobei der Werkzeugkopf über einen Hydraulikschlauch mit einer externen Hydraulikpumpe verbunden ist.

Ferner sind aus dem Stand der Technik Lösungen zur Steuerung des Betriebs von Kabelkonfektionierungsanordnungen bekannt. Aus US 5 195 042 A ist beispielsweise ein hydraulisches Crimpwerkzeug mit computergestützter Steuerung des Hydrauliksystems bekannt, welches den freien Weg eines Indentorstiftes mit den gespeicherten Daten vergleicht und so die Parameter des Crimpvorgangs an die Eigenschaften des bearbeiteten Verbinders anpasst. Das Werkzeug verwendet ausschließlich die Bewegungsinformationen des Indentorstiftes zur Steuerung des Abbruchzeitpunktes. Ferner können die gespeicherten Daten durch den Anwender zu Dokumentationszwecken ausgelesen werden. Nachteilig ist insbesondere, dass ein einfacher Wechsel zu einem anderen Werkzeugtyp mittels Austauschen des Werkzeugkopfes nicht möglich ist.

Weiterhin ist durch EP 3 333 993 A1 und EP 3 333 994 A1 eine Lösung aus dem Stand der Technik bekannt, bei der ein ferngesteuerter Betrieb einer hydraulischen Kabelkonfektionierungswerkzeuganordnung vorschlagen wird. Hierbei wird auch eine Signalverbindung vom den Werkzeugkopf zu der Hydraulikpumpeneinheit beschrieben, über die überwacht wird, ob das Schneidmesser einen Schneidvorgang vollständig ausgeführt hat. Zwar kann mittels dieser Lösung ein Abschaltvorgang der Hydraulikpumpeneinheit gesteuert werden. Nachteilig ist jedoch, dass die werkzeugkopfspezifischen Betriebsparameter gleichwohl durch das Bedienpersonal an der Hydraulikpumeneinheit eingestellt werden müssen.

In der WO2016/198973 A1 wird eine Kabelkonfektionierungswerkzeuganordnung nach dem Oberbegriff des Anspruchs 1 offenbart.

Die erfindungsgemäße Kabelkonfektionierungswerkzeuganordnung weist als Grundkomponenten einen Werkzeugkopf, einen Hydraulikhochdruckschlauch, ein Hydraulikaggregat und eine Datenübertragungsverbindung auf.

Erfindungsgemäß weist der Werkzeugkopf einen hydraulischen Arbeitszylinder, einen Werkzeugeinsatz, eine Werkzeugkopfdateneinheit und eine erste Datenschnittstelle auf.

Der Werkzeugkopf ist die handgeführte Baugruppe der Kabelkonfektionierungsanordnung und wird von einem Bediener an ein zu bearbeitendes Kabel herangeführt. Als Kabel im Sinne dieser Anordnung werden alle elektrischen Leiter in der Elektrotechnik verstanden, wobei diese insbesondere als Kabel im engeren Sinne, also als ein mit Isolierstoffen ummantelter ein- oder mehradriger Verbund von Einzelleitungen, oder als Leiterseile, also als ein zum Stromtransport dienendes Seil einer Freileitung, oder als Einzelleitungen, mit und ohne Isolierung, vorliegen können.

Der hydraulisch betriebene Werkzeugeinsatz führt den unmittelbaren Bearbeitungsvorgang aus. Er ist vorzugsweise auswechselbar ausgebildet und bietet somit die Möglichkeit, verschiedene Werkzeugtypen (Press-, Schneid-, Crimp-, Aufweitungswerkzeuge oder Ähnliches) mit demselben Werkzeugkopf zu betreiben. Erfindungsgemäß überträgt der hydraulisch Arbeitszylinder eine Kraft auf den Werkzeugeinsatz, wodurch die Funktionsteile des jeweils eingesetzten Werkzeugeinsatzes betätigt werden.

In der Werkzeugkopfdateneinheit liegen Daten vor, die den Werkzeugkopf betreffen. Diese den Werkzeugkopf betreffenden Daten werden nachfolgend auch als Werkzeugkopfdaten bezeichnet.

Bei den Werkzeugkopfdaten handelt es sich erfindungsgemäss um Identifikationsdaten aus denen der Werkzeugkopftyp oder auch die Werkzeugkopfidentität hervorgeht. In diesem Fall kann es sich beispielsweise um einen numerischen oder alphanumerischen Code handeln. In einem einfachen Fall kann die Werkzeugkopfdateneinheit damit als ein in einem RFID hinterlegter Identitätscode vorliegen.

Ferner kann es sich bei den Werkzeugkopfdaten um Daten über Betriebszustände des Werkzeugkopfes handeln. Solche Betriebszustände können beispielsweise Verfahrwege von Elementen des Werkzeugeinsatzes, Betätigungskräfte oder eine kumulierte Anzahl von Betätigungen des Werkzeugeinsatzes sein.

Bevorzugt ist der Werkzeugkopfdateneinheit ein Lesegerät zugeordnet, welches mit einem passenden Signalgeber am Werkzeugeinsatz so interagiert, dass es den Werkzeugtyp erkennt und Daten hierzu in der Werkzeugkopfdateneinheit verfügbar macht. Die automatische Werkzeugerkennung kann beispielsweise elektronisch durch einen RFID-Chip mit entsprechendem Lesegerät oder mechanisch durch eine Verbindung nach dem Schlüssel-Schlossprinzip (zum Beispiel Haken, Stifte, Aussparungen oder ähnlichem im Kopplungsbereich) realisiert sein. Durch Tasten, Dreh- oder Schiebeschalter kann ferner optional auch manuell ein Signal erzeugt und zur Werkzeugkopfdateneinheit oder auch direkt zur ersten Datenschnittstelle übermittelt werden.

Die Werkzeugkopfdateneinheit ist mit der ersten Datenschnittstelle verbunden.

Erfindungsgemäß ist die erste Datenschnittstelle so ausgebildet, dass sie die Werkzeugkopfdaten von der Werkzeugkopfdateneinheit an die Datenübertragungsverbindung überträgt und vorzugsweise vorher in ein weiterleitbares Daten- oder Signalformat umwandelt, zum Beispiel als Umwandlung in optische Signale oder als Signalmodulationen.

Der Hydraulikhochdruckschlauch stellt die hydraulische Verbindung zwischen dem Hydraulikaggregat und dem Werkzeugkopf her. Erfindungsgemäß ist der Hydraulikhochdruckschlauch sowohl mit dem Hydraulikaggregat als auch mit dem Werkzeugkopf so verbunden, dass über ihn eine Druckstromübertragung eines Hydraulikfluids zwischen der hydraulischen Pumpeinheit und dem Arbeitszylinder ausführbar ist.

Das Hydraulikaggregat weist eine hydraulische Pumpeinheit, eine Pumpensteuerung, eine Steuerungs- und Auswerteeinheit und eine zweite Datenschnittstelle auf.

Die hydraulische Pumpeinheit erzeugt den hydraulischen Druckstrom des Hydraulikfluids, welcher zum Betreiben der Werkzeugeinsätze benötigt und über den Hydraulikhochdruckschlauch zum Arbeitszylinder geleitet wird. Hierbei können unterschiedliche Betriebsdrücke vorliegen. In der Regel handelt es sich um Betriebsdrücke im Bereich von 150 bis 2.000 bar. Die hydraulische Pumpeinheit weist dabei eine Hydraulikpumpe im engeren Sinne sowie einen Elektromotor auf, welcher die Hydraulikpumpe antreibt.

Bei der Pumpensteuerung handelt es sich um die Steuereinheit für den Elektromotor der Pumpeneinheit. Die Pumpensteuerung regelt die Betriebsparameter (wie Druckbeaufschlagungsintervalle, Enddrücke oder die Zu- und Abschaltung) der hydraulischen Pumpeinheit.

Mit der zweiten Datenschnittstelle ist die Steuerungs- und Auswerteeinheit verbunden. Die zweite Datenschnittstelle steht in Verbindung zu der Datenübertragungsverbindung und erhält von dieser die übertragenen Werkzeugkopfdaten. Mittels der zweiten Datenschnittstelle ist eine Umwandlung der erhaltenen Werkzeugkopfdaten aus den Daten- oder Signalformaten der Datenübertragungsverbindung in Datenformate durchführbar, die von der Steuerungs- und Auswerteeinheit verarbeitbar sind und leitet so die Werkzeugkopfdaten an die Steuerungs- und Auswerteeinheit weiter.

Die Steuerungs- und Auswerteeinheit liegt vorzugsweise als Controller oder Rechner vor. Die Steuerungs- und Auswerteeinheit ist zur Verarbeitung der Werkzeugkopfdaten ausgebildet. Als Verarbeitung von Werkzeugkopfdaten ist jede Form der Datenverarbeitung von Werkzeugkopfdaten zu verstehen.

Beispielsweise ist es als Verarbeitung zu verstehen, wenn mit Hilfe einer Steuerungssoftware aus den Werkzeugkopfdaten im Betriebsverlauf Steuersignale erzeugt werden. Die Steuersignale können zur Überwachung und Steuerung der Kabelkonfektionierungswerkzeuganordnung verwendet und an Steuerelemente oder Anzeigeelemente ausgegeben werden. Eine Verarbeitung kann beispielsweise auch so erfolgen, dass die übertragenen Werkzeugkopfdaten einen numerischen Code aufweisen, der in der Werkzeugkopfdateneinheit hinterlegt ist. Anhand dieses Codes erkennt die Steuerungs- und Auswerteeinheit den Typ des Werkzeugkopfs und erzeugt ein Signal an die Pumpensteuerung, womit der maximal von der hydraulischen Pumpeneinheit abgegebene Druck auf einen bestimmten Wert, der auf den Typ des Werkzeugkopfs abgestimmt ist, begrenzt wird. Zudem kann die Verarbeitung so erfolgen, dass die übertragenen Werkzeugkopfdaten beispielsweise eine Information über den Verfahrweg von beweglichen Teilen des Werkzeugeinsatzes, beispielsweise einer Schneidklinge, aufweisen. Sobald der Verfahrweg einen bestimmten Wert erreicht hat, kann die Steuerungs- und Auswerteeinheit beispielsweise einen Steuerbefehl erzeugen und die hydraulische Pumpeinheit abschalten. Als Verarbeitung ist es auch bereits zu verstehen, wenn beispielsweise Werkzeugkopfdaten als Identitätsdaten vorliegen und unverändert zu Dokumentationszwecken weitergeleitet werden, beispielsweise an einen Datenspeicher um zu dokumentieren, welcher Werkzeugkopf im Einsatz war. Diese Daten sind zum Beispiel bei der Festlegung beziehungsweise der Wahrung von Wartungszyklen interessant. Zusätzlich kann in die Verarbeitung von Werkzeugkopfdaten auch eine Verarbeitung von solchen Daten einbezogen sein, die nicht Werkzeugkopfdaten sind. Diese Daten werden nachfolgend auch Zusatzdaten genannt. Solche Zusatzdaten können beispielsweise in dem Hydraulikaggregat verfügbar sein, wie beispielsweise die Höhe von elektrischen Strömen des Elektromotors der hydraulischen Pumpeinheit, um so Belastungszustände detektieren zu können.

Erfindungsgemäß verbindet die Datenübertragungsverbindung die erste mit der zweiten Datenschnittstelle. Mittels der Datenübertragungsverbindung sind die Werkzeugkopfdaten übertragbar. Die Übertragung kann über alle bekannten und geeigneten Übertragungsmittel, insbesondere drahtgebunden oder auch drahtlos erfolgen. Beispielsweise erfolgt die Übertragung drahtlos in entsprechenden Standards wie zum Beispiel Funk, Bluetooth oder NFC.

Die bauliche Trennung des Hydraulikaggregates vom Werkzeugkopf besitzt den Vorteil, dass der Werkzeugkopf so gestaltet werden kann, dass er ein geringes Gewicht aufweist und die Hauptkomponenten im Hydraulikaggregat untergebracht sind. Somit ist eine leichte Handhabung trotz der zusätzlichen Komponenten für die Datenprozessierung möglich. Ferner können an dem Hydraulikaggregat unterschiedliche Werkzeugköpfe angeschlossen werden.

Ein wichtiger Vorteil der Erfindung ist es, dass trotz der baulichen Trennung von Hydraulikaggregat und Werkzeugkopf sowie auch bei einem Einsatz unterschiedlicher Werkzeugköpfe eine Lösung gefunden wurde, mit der eine hohe Betriebssicherheit erreicht wird. Die erfindungsgemäße Kabelkonfektionierungswerkzeuganordnung ermöglicht es vorteilhaft beispielsweise, Werkzeugköpfe vor einer Beaufschlagung mit zu hohen Drücken des Hydraulikfluids zu schützen. Ferner wird auch die Arbeitssicherheit als Teil der Betriebssicherheit erhöht, indem regelwidrige Betriebszustände des Werkzeugskopfs erkannt werden und beispielsweise Notabschaltungen vorgenommen werden können. Zudem kann beispielsweise auch die Gesamtzahl von Bearbeitungsvorgängen, die mit einem Werkzeugkopf oder einem Werkzeugeinsatz durchgeführt wurden, erfasst werden, um so eine rechtzeitige Inspektion oder einen rechtzeitigen Wechsel von Verschleißteilen sicherzustellen und zugleich vorzeitige Inspektionen oder einen vorzeitigen Wechsel von Verschleißteilen zu vermeiden.

Ein weiterer Vorteil liegt in einer möglichen Sicherung der Qualität von Bearbeitungsvorgängen. Beispielsweise wird es ermöglicht, die ordnungsgemäße Durchführung von Bearbeitungsvorgängen sicherzustellen, indem Betriebszustände wie Drücke oder Verfahrwege von Werkzeugelementen überwacht sowie vorzugsweise zudem geregelt werden.

Vorteilhaft ist es zudem, dass eine erhöhte Sicherheit gegen Fehlbedienungen erreicht wird, da es möglich ist, dass bereits auf der Basis der Werkzeugkopfdaten das Hydraulikaggregat automatisiert für den jeweiligen Werkzeugkopf, sowie vorzugsweise auch für den jeweiligen Werkzeugeinsatz kompatible Betriebszustände einnimmt. Damit im Zusammenhang steht der Vorteil, dass die Bedienung erleichtert wird und ein geringerer Schulungsaufwand für das Bedienpersonal erforderlich ist.

Ein weiterer Vorteil liegt in der Zeitersparnis, da das Bedienpersonal von Einstellungen des Hydraulikaggregats entlastet wird. Zugleich entsteht kein zusätzlicher Arbeitsaufwand für das Bedienpersonal, da in allen Ausgestaltungen die Datenübertragungsverbindung ohne zeitlichen Zusatzaufwand für das Bedienpersonal vorliegt.

Ein weiterer Vorteil besteht darin, dass Bearbeitungsvorgänge überwachbar und dokumentierbar sind.

Werden optional zusätzlich auch Mittel wie ein Sende- oder Sende- und Empfangsmodul vorgesehen, ermöglicht dies auch eine Verbindung zu einer zentralen Leitstelle. Vorteilhaft ist es dann möglich, Arbeitsabläufe und Werkzeugzustände ohne eine direkte Begehung der Baustellen zu verfolgen. Besondere Vorteile ergeben sich, wenn man mehrere Baustellen miteinander vernetzt und so Logistik und Personal optimieren kann.

Gemäß einer vorteilhaften Weiterbildung ist die Datenübertragung als Datenübertragungsleitung ausgebildet, wobei die Datenübertragungsleitung mit dem Hydraulikhochdruckschlauch baulich verbunden ist.

Als baulich verbunden ist es insbesondere anzusehen, wenn die Datenübertragungsleitung in den Mantel des Hydraulikhochdruckschlauchs eingelassen ist. Bei dieser Weiterbildung weist der Hydraulikhochdruckschlauch neben den hydraulischen Kopplungen zugleich Kopplungen auf, welche eine Verbindung der Datenübertragungsleitung zu den jeweiligen Datenschnittstellen herstellen.

Ein Vorteil dieser Weiterbildung besteht darin, dass die Datenverbindung mit dem selben Arbeitsschritt, mit dem die Hydraulikverbindung hergestellt wird, aufgebaut wird, was die Einfachheit und die Sicherheit der Bedienung sichert. Vorteilhaft ist zudem die geringere Anfälligkeit gegenüber elektrischen oder elektromagnetischen Feldern. Zudem besteht der Vorteil einer robusten Ausbildung der Datenübertragungsleitung, da diese mechanisch durch den Hydraulikhochdruckschlauch geschützt ist.

Gemäß einer nächsten vorteilhaften Weiterbildung ist die Datenübertragungsleitung als optischer Leiter ausgebildet.

Durch die Ausbildung als optischer Leiter besteht der zusätzliche Vorteil einer besonders geringen Störanfälligkeit auch gegenüber besonders starken elektrischen oder elektromagnetischen Feldern, wie diese bei typischerweise vorliegenden Einsatzorten der Kabelkonfektionierungsanordnung auftreten, konkret in der nahen Umgebung von Hochspannungsleitungen oder Umspannwerken.

Im Übrigen bestehen auch bei einem optischen Leiter die gleichen Vorteile wie bei einer sonstigen Datenübertragungsleitung, die baulich mit den Hydraulikhochdruckschlauch verbunden ist.

Gemäß einer anderen vorteilhaften Weiterbildung weist die Werkzeugkopfdateneinheit eine Sensoreinheit auf.

Die Sensoreinheit ist ausgebildet, Betriebszustandsdaten wie zum Beispiel Kräfte, Positionen und Wege beweglicher Bauteile oder Drücke am Werkzeugeinsatz zu erfassen und als Werkzeugkopfdaten verfügbar zu machen.

Die Werkzeugkopfdaten aus der Sensorik des Werkzeugkopfes erlauben eine noch bessere Steuerung des Betriebs des Werkzeuges. Beispielsweise können weg- oder kraftgesteuerte Bearbeitungsvorgänge durchgeführt werden.

Zusätzlich können beispielsweise mit Leitfähigkeitsmessungen eines zu bearbeitenden Kabels mittels des Kontakts der angreifenden Werkzeugelemente erfolgen.

Ferner kann eine automatisierte Messung des Kabelquerschnitts durch Detektion des dem Werkzeug entgegengesetzten mechanischen Widerstands mittels der aufzubringenden Kraft erfolgen. Aus der Kombination kann beispielsweise auch eine Aussage zu dem Kabelmaterial anhand des spezifischen Widerstands gegeben werden.

Mit Leitfähigkeitsmessungen kann auch überprüft werden, ob eine leitfähige Verbindung zwischen einer Aderendhülse und einem Kabel entstanden ist.

Diese mittels der Werkzeugdaten verfügbaren Informationen dienen dann zur besseren Anpassung der Betriebsparameter, beispielsweise durch auf das Material angepasste Druckwerte oder durch einen Abbruch des Pressvorgangs nach dem Erreichen einer leitfähigen Verbindung.

Bei Schneidvorgängen ist es möglich, die vollständige Durchtrennung des Materials beispielsweise mittels der Belastung der scherenden Teile zu detektieren und den Vorgang nach Erfolg oder bei zu hoher Belastung des Werkzeugs abzubrechen.

Gemäß einer weiteren vorteilhaften Weiterbildung ist die Steuerungs- und Auswerteeinheit mit der Pumpensteuerung verbunden, wobei mittels der Steuerungs- und Auswerteeinheit während des Betriebs Steuersignale erzeugbar und an die Pumpensteuerung übertragbar sind.

Die Verbindung der Steuerungs- und Auswerteeinheit mit der Pumpensteuerung ermöglicht es, die Zu- und Abschaltung der Pumpe sowie den Betriebsdruck anzupassen. Die Steuersignale können einfache logische Befehle wie "An" oder "Aus" bei einer festgelegten Vorbedingung sein oder auch komplexe Befehlsreihen wie zum Beispiel Drücke mit x bar für y Sekunden wenn beispielsweise ein bestimmter Querschnitt und ein bestimmtes Kabelmaterial wie beispielsweise Kupfer erkannt wurde.

Gemäß einer weiteren vorteilhaften Weiterbildung ist die Steuerungs- und Auswerteeinheit mit einem Datenspeicher verbunden, wobei in dem Datenspeicher Werkzeugkopfdaten speicherbar sind. Der Datenspeicher kann festverbaut oder als austauschbares Speichermodul gestaltet sein.

Der Datenspeicher kann insbesondere zur Speicherung der Werkzeugkopfdaten oder von Daten, die aus der Verarbeitung von Werkzeugkopfdaten gewonnen wurden, dienen. Die gespeicherten Daten werden nachfolgend auch Speicherdaten genannt.

Die Speicherdaten ermöglichen als besonderen Vorteil eine Dokumentation und Nachweisführung von Bearbeitungsvorgängen. Es wird zudem auch eine nachträgliche Bearbeitung der Speicherdaten auch außerhalb der Kabelkonfektionierungswerkzeuganordnung ermöglicht. So können Fehler bei der Bedienung oder Fehler von Ergebnissen eines Bearbeitungsvorgangs, zum Beispiel eine unzureichende Verbindung zwischen einem Kabel und einer Aderendhülse, festgestellt werden. Dies kann die Grundlage für eine schnellere Lokalisierung und Ausbesserung sein.

Soweit es sich bei dem Datenspeicher um ein austauschbares Speichermodul handelt, erleichtert dies den Datenaustausch mit anderen EDV-Systemen.

Erfundungsgemäss weist die Kabelkonfektionierungswerkzeuganordnung einen GPS-Empfänger auf, welcher mit der Steuerungs- und Auswerteeinheit verbunden ist und GPS-Daten an sie überträgt. Die GPS-Daten werden vorzugsweise mit den Werkzeugkopfdaten verknüpft und dienen zur Dokumentation des Arbeitsvorgangs. Durch die so verfügbaren Geodaten ist eine Zuordnung eines Bearbeitungsvorgangs zu einer bestimmten Montagestelle möglich. Vorzugsweise sind die Daten in einem Datenspeicher gespeichert.

Erfindungsgemäss ist die Steuerungs- und Auswerteeinheit ausgebildet die Werkzeugkopfdaten und die GPS-Daten zu verarbeiten und hieraus Steuersignale zu erzeugen und an die Pumpensteuerung zu übertragen.

Verknüpft man die GPS-Daten mit den Werkzeugkopfdaten ergeben sich viele Vorteile im Bereich der Arbeitsüberwachung. So kann der Arbeitsfortschritt bei der Verlegung neuer Kabel dokumentiert und vorzugsweise sogar unmittelbar verfolgt werden.

Als weiterer Vorteil kann die Sicherheit des Bedienpersonals durch die Verwendung von GPS-Daten verbessert werden. Zum ersten kann bei einer Erkennung von kritischen Betriebszuständen, wie beispielsweise der Detektion von elektrischen Spannungen oder eines Lichtbogens, ein Notruf verknüpft mit GPS-Daten erzeugt werden. Die Sensoreinheit des Werkzeugkopfs weist dann bevorzugt Sensoren zur Detektion von elektrischen Spannungen oder eines Lichtbogens auf. Zum zweiten kann auch ein Notknopf an der Anordnung vorgesehen werden, um manuell gesteuert einen Notruf mit den GPS-Daten zu versenden. So können die Rettungsdienste etwa verletztes Bedienpersonal, insbesondere auch außerhalb von besiedelten Gebieten, schneller finden.

Werden die Werkzeugkopfdaten mit den GPS-Daten verknüpft kann die Kabelkonfektionierungswerkzeuganordnung auch außerhalb von Notfallsituationen eigenständig Betriebszustände oder Wartungszyklen melden. So kann die Versorgung beispielsweise mit Ersatzteilen frühzeitig eingeleitet werden.

Die Organisation von Bearbeitungsvorgängen und die damit verbundene Logistik kann wesentlich vereinfacht werden. Besonders bei der Vernetzung mehrerer Kabelkonfektionierungsanordnungen mit einer Zentrale können Arbeitsabläufe erheblich optimiert werden.

Die Kommunikation der Kabelkonfektionierungswerkzeuganordnung mit externen Gegenstellen kann auch unter Einbeziehung einer Internetverbindung, auch als IOT- Internet of Things, sowie unter Nutzung beispielsweise eines Standards wie UMTS realisiert werden.

Bei Diebstahl oder Verlust der Kabelkonfektionierungswerkzeuganordnung ist es möglich zum Beispiel bei Wiederinbetriebnahme durch Ermittlung des Standortes ein Auffinden zu unterstützen.

Gemäß einer weiteren vorteilhaften Weiterbildung sind Daten von der zweiten zur ersten Datenschnittstelle übertragbar. Gemäß dieser Weiterbildung liegt dann eine bidirektonale Kommunikation zwischen Werkzeugkopf und Hydraulikaggregat vor.

Eine Datenübertragung vom Hydraulikaggregat zurück zum Werkzeugkopf ermöglicht eine Anzeige von Informationen in Form von Displays, einzelnen Leuchtdioden oder Leuchtdiodenanordnungen. Es ist dadurch zum Beispiel möglich, das Erreichen eines Maximaldruckes, das korrekte Erkennen eines Werkzeugeinsatzes oder die fehlerfreie Durchführung eines Arbeitsschrittes im Sichtfeld des Bedienpersonals anzuzeigen. Dadurch wird die Bedienerfreundlichkeit der Anordnung deutlich verbessert.

Auch das Rücksenden von Steuersignalen, zum Beispiel an die Sensoreinheit, bietet Vorteile. So können vom Werkzeugeinsatz nicht benötigte Sensoren abgeschaltet werden oder die Sammlung der Daten am Messkopf durch die Steuerungs- und Auswerteeinheit angesteuert werden. Auch hierdurch kann die Bedienerfreundlichkeit weiter gesteigert werden.

Vorzugsweise ist in einer Weiterbildung der Steuerungs- und Auswerteeinheit eine Serviceschnittstelle zugeordnet. Über die Serviceschnittstelle kann eine Verbindung zu einer externen EDV-Anlage hergestellt werden. Mittels der Serviceschnittstelle können beispielsweise Vorgangsdaten, die in dem Datenspeicher archiviert sind, ausgelesen werden. Ferner können über die Serviceschnittstelle vorzugsweise auch solche Daten und Software an die Steuerungs- und Auswerteeinheit übertragen werden, welche die Funktion der Kabelkonfektionierungsanordnung beeinflussen. Zudem kann der Steuerungs- und Auswerteeinheit vorteilhaft auch ein GSM-Modul zugeordnet sein, so dass Daten von der Kabelkonfektionierungsanordnung oder umgekehrt an die Kabelkonfektionierungsanordnung unter Nutzung von Mobilfunknetzen erfolgen kann, so dass ein ortsungebundener Zugriff möglich ist. Wird eine kabellose Datenübertragungsverbindung verwendet, kann optional auch eine der beiden Datenschnittstellen direkt zum Abrufen von Daten verwendet werden.

Die Erfindung wird als Ausführungsbeispiel anhand von
- Fig. 1: Schematische Darstellung mit einer Datenübertragungsverbindung mittels in den Hochdruckhydraulikschlauch integrierter Datenübertragungsleitung
- Fig. 2: Schematische Darstellung mit drahtloser Datenübertragungsverbindung
näher erläutert.

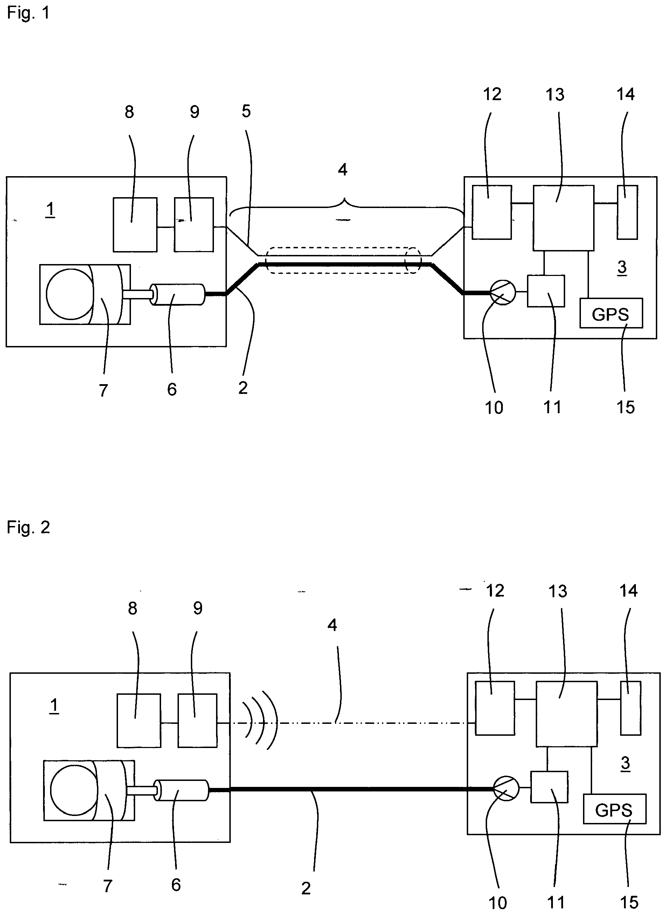

Die Figur 1 zeigt hierbei ein Schema eines ersten Ausführungsbeispiels der Kabelkonfektionierungswerkzeuganordnung, welche aus dem Werkzeugkopf 1, dem Hydraulikhochdruckschlauch 2, dem Hydraulikaggregat 3 und Datenübertragungsverbindung 4 besteht.

Der Werkzeugkopf 1 besteht aus dem Arbeitszylinder 6, dem Werkzeugeinsatz 7, der Werkzeugkopfdateneinheit 8 und der ersten Datenschnittstelle 9.

Das Hydraulikaggregat 2 besteht aus der Pumpeinheit 10, der Pumpensteuerung 11, der zweiten Datenschnittstelle 12, der Steuerungs- und Auswerteeinheit 13, dem Datenspeicher 14 und dem GPS-Empfänger 15.

Der Hydraulikhochdruckschlauch 2 ist eine physische Verbindung zwischen dem Hydraulikaggregat 3 und dem Werkzeugkopf 1 und ermöglicht eine Druckstromübertragung zwischen der Pumpeinheit 10 und dem Arbeitszylinder 6.

Der Werkzeugkopf 1 weist Führungen und Arretierungen für die Werkzeugeinsätze auf. Bei einem Wechsel des Werkzeugeinsatzes 7 wird im Ausführungsbeispiel eine Verbindung zu einer Leseeinheit unterbrochen. Beim Einsetzen werden die Verbindungen wiederhergestellt und die Leseeinheit registriert den Werkzeugeinsatztyp. Die Leseeinheit ist mit der Werkzeugkopfdateneinheit 8 verbunden, so dass in der Werkzeugkopfdateneinheit 8 Werkzeugkopfdaten vorliegen, denen der Werkzeugeinsatztyp zu entnehmen ist. Ferner weist der Werkzeugkopf 1 in diesem Ausführungsbeispiel eine Sensoreinheit auf, mit welcher die Position von beweglichen Teilen des Werkzeugeinsatzes abgreifbar und an die Werkzeugkopfdateneinheit 9 übertragbar ist. Ferner kann die Sensoreinheit die von dem hydraulischen Arbeitzylinder 6 an den Werkzeugeinsatz 7 übertragene Kraft messen und an die Werkzeugkopfdateneinheit 9 übertragen. Als Werkzeugkopfdaten liegen neben den Daten zum Werkzeugeinsatztyp auch Daten zu Betriebszuständen, konkret zu der beaufschlagten Kraft und zur aktuellen Position von beweglichen Teilen des Werkzeugeinsatzes vor.

Die Werkzeugkopfdateneinheit 8 überträgt Daten an die erste Datenschnittstelle 9, welche diese dann in ein übertragungsfähiges Format umwandelt und über die Datenübertragungsverbindung 4 an die zweite Datenschnittstelle überträgt.

Die Datenübertragungsverbindung 4 ist in dem ersten Ausführungsbeispiel als Datenübertragungsleitung 5 und somit als physische Verbindung zwischen den Datenschnittstellen ausgestaltet. In dem Ausführungsbeispiel ist die Datenübertragungsleitung 5 baulich mit dem Hydraulikhochdruckschlauch 2 verbunden. In dem Ausführungsbeispiel ist die Datenübertragungsleistung als Glasfaserleitung ausgebildet und in den Mantel des Hydraulikhochdruckschlauches 2 eingelassen. Die hydraulischen Kupplungen weisen im Ausführungsbeispiel zusätzlich jeweils eine optische Kupplung auf, welche jeweils mit der ersten und der zweiten Datenschnittstelle 9, 12 verbunden sind.

Die zweite Datenschnittstelle 12 empfängt die Werkzeugkopfdaten von der ersten Datenschnittstelle 9, wandelt diese in ein von der Steuerungs- und Auswerteeinheit verarbeitbares Format um und leitet sie an die Steuerungs- und Auswerteeinheit weiter.

Der GPS-Empfänger 15 liefert Positionsdaten an die Steuerungs- und Auswerteeinheit 13.

Die Steuerungs- und Auswerteeinheit 13 prozessiert die Werkzeugkopf- und GPS-Daten mit einer integrierten Steuersoftware zu Steuersignalen und Kenndaten. Die Steuersignale werden zur Pumpensteuerung 11 und die Kenndaten an den Datenspeicher 14 ausgegeben.

Der Datenspeicher 14 sichert die Kenndaten und ist festverbaut.

Fig. 2 zeigt ein zweites, modifiziertes Ausführungsbeispiel, welches in seinem Aufbau mit Ausnahme der Ausbildung der Datenübertragungsverbindung 4 dem Aufbau des Ausführungsbeispiels gemäß Fig. 1 entspricht.

In dem modifizierten Ausführungsbeispiel ist die Datenübertragungsverbindung 4 als drahtlose Verbindung ausgebildet. Hierzu weisen die erste und die zweite Datenschnittstelle Mittel zur Datenübertragung nach dem Bluetooth-Standard auf.

### Verwendete Bezugszeichen

- 1: Werkzeugkopf
- 2: Hydraulikhochdruckschlauch
- 3: Hydraulikaggregat
- 4: Datenübertragungsverbindung
- 5: Datenübertragungsleitung
- 6: Arbeitszylinder
- 7: Werkzeugeinsatz
- 8: Werkzeugkopfdateneinheit
- 9: erste Datenschnittstelle
- 10: Pumpeinheit
- 11: Pumpensteuerung
- 12: zweite Datenschnittstelle
- 13: Steuerungs- und Auswerteeinheit
- 14: Datenspeicher
- 15: GPS-Empfänger

## Patentansprüche

1. Kabelkonfektionierungswerkzeuganordnung aufweisend einen Werkzeugkopf (1), einen Hydraulikhochdruckschlauch (2), ein Hydraulikaggregat (3) und eine Datenübertragungsverbindung (4),
wobei der Werkzeugkopf (1) einen hydraulischen Arbeitszylinder (6), einen Werkzeugeinsatz (7), welcher durch den hydraulischen Arbeitszylinder (6) betätigt ist, eine Werkzeugkopfdateneinheit (8) und eine erste Datenschnittstelle (9), welche mit der Werkzeugkopfdateneinheit (8) verbunden ist, aufweist,
wobei der Hydraulikhochdruckschlauch (2) eine Druckstromübertragung aufweist, mittels welcher ein Druckstrom von dem Hydraulikaggregat (3) zu dem Werkzeugkopf (1) übertragbar ist,
wobei das Hydraulikaggregat (3) eine hydraulische Pumpeinheit (10), mittels welcher ein Druckstrom erzeugbar ist, eine Pumpensteuerung (11), mittels welcher die hydraulischen Pumpeinheit (10) steuerbar ist, eine Steuerungs- und Auswerteeinhheit (13) und eine zweite Datenschnittstelle (12) aufweist, welche mit der Steuerungs- und Auswerteeinheit (13) verbunden ist, wobei mittels der Datenübertragungsverbindung (4) die erste und die zweite Datenschnittstelle (9, 12) verbunden sind
und wobei Werkzeugkopfdaten mittels der Datenübertragungsverbindung (4) und der ersten und der zweiten Datenschnittstelle (9, 12) an die Steuerungs- und Auswerteeinheit (13) übertragbar und von der Steuerungs- und Auswerteeinheit (13) verarbeitbar sind und wobei die Werkzeugkopfdaten Werkzeugkopfidentitätsdaten oder Werkzeugkopftypendaten aufweisen,
wobei die Kabelkonfektionierungswerkzeuganordnung einen GPS-Empfänger (15) aufweist, **dadurch gekennzeichnet, dass** der GPS-Empfänger (15) mit der Steuerungs- und Auswerteeinheit (13) verbunden ist und mittels des GPS-Empfängers (15) GPS-Daten an die Steuerungs- und Auswerteeinheit (13) übertragbar sind,
und dass die Steuerungs- und Auswerteeinheit (13) ausgebildet ist, die Werkzeugkopfdaten und die GPS-Daten zu verarbeiten und hieraus Steuersignale zu erzeugen und an die Pumpensteuerung zu übertragen.

2. Kabelkonfektionierungswerkzeuganordnung nach Anspruch 1,
**dadurch gekennzeichnet,**
**dass** die Datenübertragungsverbindung (4) als Datenübertragungsleitung (5) ausgebildet ist, wobei die Datenübertragungsleitung (5) mit dem Hydraulikhochdruckschlauch (2) baulich verbunden ist.

3. Kabelkonfektionierungswerkzeuganordnung nach einem der vorhergehenden Ansprüche,
**dadurch gekennzeichnet,**
**dass** die Datenübertragungsleitung (5) als ein optischer Leiter ausgebildet ist.

4. Kabelkonfektionierungswerkzeuganordnung nach einem der vorhergehenden Ansprüche,
**dadurch gekennzeichnet,**
**dass** der Werkzeugkopfdateneinheit (8) eine Sensoreinheit zugeordnet ist.

5. Kabelkonfektionierungswerkzeuganordnung nach einem der vorhergehenden Ansprüche,
**dadurch gekennzeichnet,**
**dass** die Steuerungs- und Auswerteeinheit (13) mit der Pumpensteuerung (11) verbunden ist, wobei mittels der Steuerungs- und Auswerteeinheit ein Steuersignal erzeugbar und an die Pumpensteuerung übertragbar ist.

6. Kabelkonfektionierungswerkzeuganordnung nach einem der vorhergehenden Ansprüche,
**dadurch gekennzeichnet,**
**dass** die Steuerungs- und Auswerteeinheit (13) mit einem Datenspeicher (14) verbunden ist,
wobei mittels des Datenspeichers (14) Werkzeugkopfdaten speicherbar sind.

7. Kabelkonfektionierungswerkzeuganordnung nach einem der vorhergehenden Ansprüche,
**dadurch gekennzeichnet,**
**dass** mittels des Datenspeichers (14) GPS-Daten speicherbar sind.

8. Kabelkonfektionierungswerkzeuganordnung nach einem der vorhergehenden Ansprüche,
**dadurch gekennzeichnet,**
**dass** mittels der Datenübertragungsverbindung (13) Hydraulikaggregatdaten von der zweiten Datenschnittstelle (12) an die erste Datenschnittstelle (9) übertragbar sind.

## Claims

1. A cable packaging tool arrangement, comprising a tool head (1), a hydraulic high-pressure hose (2), a hydraulic power unit (3) and a data transmission link (4),
wherein the tool head (1) comprises a hydraulic working cylinder (6), a tool insert (7), which is actuated by the hydraulic working cylinder (6), a tool head data unit (8) and a first data interface (9), which is connected to the tool head data unit (8),
wherein the hydraulic high-pressure hose (2) has a pressure flow transfer by means of which a pressure flow can be transferred from the hydraulic power unit (3) to the tool head (1),
wherein the hydraulic power unit (3) comprises a hydraulic pump unit (10), by means of which a pressure flow can be generated, a pump control system (11), by means of which the hydraulic pump unit (10) can be controlled, a control and evaluation unit (13) and a second data interface (12), which is connected to the control and evaluation unit (13),
wherein the first and second data interfaces (9, 12) are connected by means of the data transmission link (4),
and wherein tool head data can be transmitted to the control and evaluation unit (13) via the data transmission link (4) and the first and second data interfaces (9, 12) and can be processed by the control and evaluation unit (13), and wherein the tool head data comprise tool head identity data or tool head type data,
wherein the cable packaging tool arrangement has a GPS receiver (15), **characterized in that** the GPS receiver (15) is connected to the control and evaluation unit (13) and GPS data can be transmitted to the control and evaluation unit (13) by means of the GPS receiver (15),
and **in that** the control and evaluation unit (13) is designed to process the tool head data and the GPS data and to generate control signals thereof and to transmit them to the pump control system.

2. The cable packaging tool arrangement according to claim 1,
**characterized in**
**that** the data transmission link (4) is designed as a data transmission line (5), wherein the data transmission line (5) is structurally connected to the hydraulic high-pressure hose (2).

3. The cable packaging tool arrangement according to one of the preceding claims,
**characterized in**
**that** the data transmission line (5) is designed as an optical conductor.

4. The cable packaging tool arrangement according to one of the preceding claims,
**characterized in**
**that** a sensor unit is assigned to the tool head data unit (8).

5. The cable packaging tool arrangement according to one of the preceding claims,
**characterized in**
**that** the control and evaluation unit (13) is connected to the pump control system (11), wherein a control signal can be generated by the control and evaluation unit and can be transmitted to the pump control system.

6. The cable packaging tool arrangement according to one of the preceding claims,
**characterized in**
**that** the control and evaluation unit (13) is connected to a data storage (14), wherein tool head data can be stored by means of the data storage (14).

7. The cable packaging tool arrangement according to one of the preceding claims,
**characterized in**
**that** GPS data can be stored by means of the data storage (14).

8. The cable packaging tool arrangement according to one of the preceding claims,
**characterized in**
**that** hydraulic unit data can be transmitted from the second data interface (12) to the first data interface (9) by means of the data transmission link (13).

## Revendications

1. Dispositif d'outils de confection de câbles présentant une tête d'outil (1), un flexible hydraulique haute pression (2), un groupe hydraulique (3) et une liaison de transmission de données (4),
dans lequel la tête d'outil (1) comprend un vérin de travail hydraulique (6), un insert d'outil (7) qui est actionné par le vérin de travail hydraulique (6), une unité de données de tête d'outil (8) et une première interface de données (9) qui est connectée à l'unité de données de tête d'outil (8),
le flexible haute pression hydraulique (2) présentant une transmission de courant de pression au moyen de laquelle un courant de pression peut être transmis du groupe hydraulique (3) à la tête d'outil (1),
le groupe hydraulique (3) présentant une unité de pompe hydraulique (10), au moyen de laquelle un courant de pression peut être généré, une commande de pompe (11), au moyen de laquelle l'unité de pompe hydraulique (10) peut être commandée, une unité de commande et d'évaluation (13) et une deuxième interface de données (12),
qui est reliée à l'unité de commande et d'évaluation (13),
la première et la deuxième interface de données (9, 12) étant reliées au moyen de la liaison de transmission de données (4)
et des données de tête d'outil pouvant être transmises à l'unité de commande et d'évaluation (13) au moyen de la liaison de transmission de données (4) et des première et deuxième interfaces de données (9, 12) et pouvant être traitées par l'unité de commande et d'évaluation (13) et les données de tête d'outil présentant des données d'identité de tête d'outil ou des données de type de tête d'outil,
le dispositif d'outils de confection de câbles présentant un récepteur GPS (15), est **caractérisé en ce que** le récepteur GPS (15) est relié à l'unité de commande et d'évaluation (13) et **en ce que** des données GPS peuvent être transmises à l'unité de commande et d'évaluation (13) au moyen du récepteur GPS (15),
et **en ce que** l'unité de commande et d'évaluation (13) est conçue pour traiter les données de tête d'outil et les données GPS et pour générer des signaux de commande à partir de celles-ci et les transmettre à la commande de pompe.

2. Dispositif d'outils de confection de câbles suivant la revendication 1 est
**caractérisé en ce**
**que** la liaison de transmission de données (4) est réalisée sous forme d'une ligne de transmission de données (5), la ligne de transmission de données (5) étant reliée par construction au flexible haute pression hydraulique (2).

3. Dispositif d'outils de confection de câbles suivant l'une quelconque des revendications précédentes
est **caractérisé en ce**
**que** la ligne de transmission de données (5) est conçue comme conducteur optique.

4. Dispositif d'outils de confection de câbles suivant l'une quelconque des
revendications précédentes est **caractérisé en ce**
**qu'**un dispositif détecteur est associé à l'unité de données de tête d'outil (8).

5. Dispositif d'outils de confection de câbles suivant l'une quelconque des revendications précédentes
est **caractérisé en ce**
**que** l'unité de commande et d'évaluation (13) est reliée à la commande de pompe (11), un signal de commande pouvant être généré au moyen de l'unité de commande et d'évaluation et transmis à la commande de pompe.

6. Dispositif d'outils de confection de câbles suivant l'une quelconque des revendications précédentes
est **caractérisé en ce**
**que** l'unité de commande et d'évaluation (13) est reliée à une mémoire de données (14),
des données de tête d'outil pouvant être mémorisées au moyen de la mémoire de données (14).

7. Dispositif d'outils de confection de câbles suivant l'une quelconque des revendications précédentes
est **caractérisé en ce**
**que** des données GPS pouvant être mémorisées au moyen de la mémoire de données (14).

8. Dispositif d'outils de confection de câbles suivant l'une quelconque des revendications précédentes
est **caractérisé en ce**
**que** des données de groupe hydraulique peuvent être transmises de la deuxième interface de données (12) à la première interface de données (9) au moyen de la liaison de transmission de données (13).
